# EUROPÄISCHE PATENTSCHRIFT

(11) **EP 3 952 697 B1**
(45) Veröffentlichungstag und Bekanntmachung des Hinweises auf die Patenterteilung: **21.06.2023**
(21) Anmeldenummer: 19729490.3
(22) Anmeldetag: 04.06.2019
(51) Int. Cl.: A45F 3/20, A47J 41/00, B65D 21/08

(54) **ZUSAMMENFALTBARER BEHÄLTER**
COLLAPSIBLE CONTAINER
RÉCIPIENT REPLIABLE

(43) Veröffentlichungstag der Anmeldung: 16.02.2022
(73) Patentinhaber: Grumago - Gruber Materials and Goods E.K., 90491 Nürnberg (DE)
(72) Erfinder: ZAPF, Andreas, 95463 Bindlach (DE); SAIZ, Oliver, 90409 Nürnberg (DE); ROTH, Mareike, 90409 Nürnberg (DE)
(74) Vertreter: Stippl Patentanwälte
(86) Internationale Anmeldenummer: PCT/EP2019/064490
(87) Internationale Veröffentlichungsnummer: WO 2020/244744

(56) Entgegenhaltungen:
- WO-A1-2015/023548
- JP-A- H10 316 126
- JP-A- 2011 219 102
- US-A- 1 033 744

## Beschreibung

Die vorliegende Erfindung betrifft einen zusammenfaltbaren Behälter, insbesondere Trinkbehälter, gemäß dem Oberbegriff des Patentanspruchs 1.

### Technologischer Hintergrund

Derartige Behälter werden üblicherweise dazu verwendet, "Getränke to go" zu konsumieren. Hierbei handelt es sich um Getränke, wie z.B. Kaffee, die üblicherweise in Einwegbechern verkauft werden, wobei nach dem Verzehr des Getränks die Einwegbecher als Müll anfallen und entsorgt werden müssen. Im Zuge eines fortschreitenden Umweltbewusstseins der Bevölkerung ist man in der Vergangenheit immer mehr dazu übergegangen, mehrfach verwendbare Behältnisse einzuführen, die von den Konsumenten mitgeführt werden und bei Bedarf Verwendung finden.

Diese Art von mehrfach verwendeten Behältnissen hat jedoch bestimmte Anforderungen, die erfüllt sein müssen, um einen zufriedenstellenden Gebrauch sicherzustellen. Hierbei handelt es sich zum einen darum, dass der wiederverwendbare Behälter hinsichtlich seiner Größe reduzierbar sein soll, dass er nach dem Gebrauch verschließbar sein soll, um unnötige Gerüche oder das Auslaufen von Restflüssigkeiten zu vermeiden, dass er in seiner gesamten Handhabung einfach sein soll und schließlich dass der wiederverwertbare Behälter einfach zu reinigen sein soll. Was die Größenreduzierung des wiederverwendbaren Behälters anbelangt, wurden in der Vergangenheit verschiedentlich auch bereits sogenannte Faltbecher vorgeschlagen. Es bleibt jedoch nach wie vor eine Herausforderung, mehrfach verwendbare Behälter zu finden, die all den obigen Anforderungen in zufriedenstellender Weise genügen.

### Druckschriftlicher Stand der Technik

Ein zusammenfaltbarer Behälter gemäß dem Oberbegriff des Anspruchs 1 ist bereits aus der WO 2015/023548 A1 bekannt. Der Behälter umfasst ein becherförmiges Element aus flexiblem verformbarem Material mit einem unterseitigen Bodenteil, einer oberseitigen Öffnung sowie dazwischen angeordneten mehreren Seitenwandabschnitten, die jeweils voneinander durch kreisförmig umfänglich umlaufende Faltlinien zueinander faltbar sind. Für ein Zusammenfalten dieses bekannten Behälters ist es somit notwendig, das becherförmige Element vom unterseitigen Bodenteil aus gegen den Deckel zu drücken, wodurch Faltungen der mehreren Seitenwandabschnitte entlang der Faltlinien nacheinander ausgelöst werden und das becherförmige Element auf diese Weise innerhalb einer oberseitigen umlaufenden Manschette untergebracht werden kann. Um den zusammengefalteten Behälter wieder zu entfalten, ist es notwendig, das Bodenteil des zusammengefalteten becherförmigen Elements zu fassen und unter Kraft wieder nach außen zu ziehen. Dies jedoch erfordert eine gewisse Handfertigkeit sowie Fingerkraft, die bei Nutzern, insbesondere älteren Nutzern, nicht immer vorhanden ist. Da die Faltlinien im Inneren des Behälters kreisförmig um die Längsachse des Bechers ringförmig umlaufen, ist zudem eine Reinigung des Inneren des Behälters schwierig und begründet deshalb die Gefahr, dass sich gerade in diesen Bereichen mit der Zeit Schmutz ansammelt.

Aus der US 2013/075393 A1 ist ein zusammenfaltbares, flaschenförmiges Behältnis bekannt, welches ein Oberteil sowie Unterteil sowie einen dazwischen befindlichen flexiblen aus Silikongummi bestehenden Mittelabschnitt aufweist. Der Behälter wird durch Verdrehen von Oberteil zu Unterteil zusammengefaltet, wobei sich der flexible Mittelabschnitt einschnürt. Damit der Behälter eine gewisse Standfestigkeit aufweist, muss der Mittelabschnitt eine bestimmte Mindestmaterialdicke umfassen.

Aus US 1 033 744 ist auch ein zusammenfaltbares Behältnis bekannt.

US 5,960,983 zeigt einen zusammenfaltbaren Kompostbehälter mit einem flexiblen Mittelabschnitt aus dünnwandigem flexiblem, folienartigem Material, welches durch einen aus einzelnen Drahtfeder bestehenden, zusammendrückbaren Korb stabilisiert wird.

US 4,930,644 zeigt ebenfalls einen Behälter mit einer folienartigen Außenwand, dessen Standfestigkeit durch ein im Außenbereich vorgesehenes Drahtgeflecht sichergestellt wird.

US 6,736,285 B2 zeigt einen faltbaren Trinkbecher mit einem kegelabschnittförmigen, becherartigen Element, welches mit schraubenwendelförmig verlaufenden Sicken versehen ist, um ein Zusammendrücken des becherförmigen Elements zu erleichtern.

Schließlich zeigt die DE 20 2017 000 238 U1 einen "Kaffee to go"-Behälter, bei dem der flexible zwischen Oberteil und Unterteil befindliche Mantel Ziehharmonika-artig zusammenfaltbar ist.

### Aufgabe der vorliegenden Erfindung

Die Aufgabe der vorliegenden Erfindung besteht darin, einen gattungsgemäßen zusammenfaltbaren Behälter zur Verfügung zu stellen, welcher einfach handhabbar.

### Lösung der Aufgabe

Die vorliegende Aufgabe wird durch einen zusammenfaltbaren Behälter gemäß den Merkmalen des Anspruchs 1 gelöst.

Zweckmäßige Ausgestaltungen der Erfindung sind in den weiteren Ansprüchen beansprucht.

Dadurch, dass das becherförmige Element durch Verdrehen des Bodenteils zum Oberteil zusammenfaltbar ist, wobei die Faltlinien derart orientiert sind, dass sich das becherförmige Element zwischen dem Bodenteil und dem Oberteil während des Verdrehens des Bodenteils durch Verwindung einschnürt, muss für das Zusammenfalten des becherförmigen Elements dieses nicht gegen den Deckel geschoben werden, sondern kann vielmehr in einer Richtung verdreht werden. Entsprechend kann zum Einleiten des Entfaltungsvorgangs das Bodenteil gefasst und in die andere Richtung gedreht werden. Das Drehen zum Auslösen des Entfaltungsvorgangs ist vor allem von Personen mit geringerer Fingerfertigkeit bzw. Fingerkraft sehr viel einfacher durchzuführen als ein Herausziehen des als ein Formteil ausgebildeten becherförmigen Elements. Das becherförmige Element ist als ein einteiliges Formteil konzipiert. Es umfasst insbesondere keine weiteren eingeformten Stützteile aus einem anderen Material.

Zweckmäßigerweise sind erste vorzugsweise geradlinige Faltlinien vom Bodenteil schräg nach oben zur oberseitigen Öffnung hin verlaufend angeordnet. Hierdurch wird das Falten bzw. Einschnüren des becherförmigen Elements durch Verdrehen des Bodenteils zum Oberteil desselben erleichtert. Darüber hinaus können die Faltlinien leichter gereinigt werden, da sie nicht rechtwinklig zu der Ebene der oberseitigen Öffnung verlaufen, sondern in einem Winkel dazu. Insbesondere kann man mit einem Reinigungstuch die Innenseite des becherförmigen Elements durch Entlangstreichen entlang der Faltlinien dort einfacher säubern als dies beim Stand der Technik der Fall war. Zusätzlich bewirken die besonders verlaufenden Faltlinien insgesamt eine Längsversteifung des flexiblen, becherförmigen Elements im entfalteten Zustand, was wiederum zur Folge hat, dass die Wandstärke desselben im Vergleich zum Stand der Technik reduziert werden kann. Daraus wiederum resultieren als weiterer Vorteil auch ein einfacheres, unter weniger aufzuwendender Kraft zu erzielendes Zusammenfalten sowie ein insgesamt geringeres Gewicht.

Dadurch, dass zweite Faltlinien vorgesehen sind, die vom Bodenteil zumindest in einem geringeren Winkel zur Senkrechten als die erste Faltlinien oder im Wesentlichen senkrecht nach oben zur oberseitigen Öffnung hin vorzugsweise geradlinig verlaufend angeordnet sind, wird das Falten des becherförmigen Elements durch Verdrehen des Bodenteils zum Oberteil desselben noch zusätzlich erleichtert. Da die zweiten Faltlinien zudem anders als die ersten Faltlinien orientiert sind, wirken auch sie zusätzlich versteifend.

Zweckmäßigerweise sind die den ersten und zweiten Faltlinien jeweils benachbarten Seitenwandabschnitte beim Zusammenfalten des becherförmigen Elements gegenläufig zueinander verschwenkbar. Der Faltprozess des becherförmigen Elements wird hierdurch zusätzlich erleichtert.

Die ersten und zweiten Faltlinien besitzen im Bereich des Bodenteils, vorzugsweise oberhalb desselben, einen gemeinsamen Ausgangspunkt bzw. Kreuzungspunkt. Insbesondere verläuft die zweite Faltlinie schräg in einem spitzen Winkel zum Verlauf der ersten Faltlinie.

Besonders zweckmäßig ist es, wenn die den ersten Faltlinien jeweils benachbarten Seitenwandabschnitte vom Umfang des becherförmigen Elements betrachtet nach innen sowie die den zweiten Faltlinien jeweils benachbarten Seitenwandabschnitte ebenfalls vom Umfang des becherförmigen Elements betrachtet nach außen verlaufen. Hierdurch wird der gegenläufige Faltungsvorgang bzw. das Einschnüren erleichtert.

Die Faltung wird zusätzlich erleichtert, wenn die Wandstärke des becherförmigen Elements im Bereich der ersten und/oder zweiten Faltlinien im Vergleich zur Wandstärke der Seitenwandabschnitte reduziert ist.

Als Material des becherförmigen Elements ist vorzugsweise Silikonkautschuk, Silikonelastomer oder Silikongummi vorgesehen. Diese Materialien sind einerseits äußerst flexibel und daher für den Faltvorgang besonders gut geeignet, zum anderen gewährleistet sie auch den nötigen Hygienestandard.

Dadurch, dass das becherförmige Element im Bereich seiner Wandabschnitte ein zwischen zwei kegelstumpfförmigen Segmenten positioniertes zylindrisches Segment aufweist, kann insbesondere dort ein Haltering aufgeschoben werden, der für eine thermische Isolierung sorgt. Als Haltering kann vorzugsweise ein elastisches Gummiband vorgesehen sein. Der Haltering dient sowohl zur thermischen Isolierung des becherförmigen Elements beim Umgriff im Gebrauch als auch zur Fixierung der Gehäusebestandteile zueinander im gefalteten Zustand des Behältnisses.

Im oberen Bereich des Behälters ist das becherförmige Element von einer Manschette seitlich umgeben. Insbesondere kann ferner ein Deckel oberseitig an der Manschette vorgesehen sein.

Dadurch, dass der oberseitige Rand und/oder ein radial nach außen stehender Kragen des becherförmigen Elements zwischen Deckel und Manschette, vorzugsweise ohne Rastung, klemmend fixiert ist, kann der Behälter in einfacher Weise komplettiert oder wieder zerlegt werden.

Die Manschette ist hierbei vorzugsweise von der Unterseite des becherförmigen Elements auf letzteres aufschiebbar, wodurch eine einfache Montierbarkeit gewährleistet ist.

Insbesondere kann die Manschette kegelstumpfförmig ausgebildet sein, so dass deren Form die Form des becherförmigen Elements aufnimmt.

Zur Fixierung bzw. Abdichtung kann der Kragen zwischen dem oberen Rand der Manschette und dem unteren Rand eines nach unten erstreckenden, umlaufenden Außenstegs des Deckels geklemmt sein. Hierdurch wird eine zusätzliche Abdichtung des Inneren des becherförmigen Elements erreicht.

Der Deckel weist eine vorzugsweise randseitig angeordnete Öffnung auf, die mittels eines Schiebers, vorzugsweise linearen Schiebers, verschließbar ist.

Des Weiteren kann vorzugsweise am Deckel oder der Manschette eine Befestigungsöse vorgesehen sein, die es ermöglicht, den Behälter beispielsweise außen an der Kleidung, an einem Rucksack oder an einer Tasche mittels eines Bands, einer Schnur eines Karabinerhakens oder eines sonstigen Fixiermittels zu befestigen.

Vorzugsweise wird der Behälter im zusammengefalteten Zustand mittels eines den Behälter vertikal umgreifenden, vorzugsweise elastischen, Halterings zusammengehalten. Der Haltering kann zudem im Gebrauchszustand als thermisch isolierende, auf das Element aufgezogene Haltemanschette verwendet werden.

Dadurch, dass im entfalteten Zustand des becherförmigen Elements, vorzugsweise an der Innenseite des becherförmigen Elements, in diesen als Materialverjüngung eingeformte, dritte Faltlinien vom Bodenteil schräg, vorzugsweise geradlinig, nach oben zur oberseitigen Öffnung hin verlaufend angeordnet sind, wird der Faltvorgang noch zusätzlich erleichtert. Das Material des becherförmigen Elements kann sich beim Eindrehen um diese dritten Faltlinien zusätzlich etwas nach innen falten. Hierdurch wird das Einschnüren noch zusätzlich erleichtert und der Kraftaufwand noch zusätzlich reduziert.

Ferner kann im entfalteten Zustand des becherförmigen Elements in dem oberen Bereich desselben, vorzugsweise an der Innenseite des becherförmigen Elements eine in dieses eingeformte, vierte Faltlinie radial umlaufend verlaufend angeordnet sein. Hierdurch kann am Ende des Eindrehens durch ein Umfalten um diese umlaufende vierte Faltlinie die Höhe des gefalteten Bereichs des becherförmigen Elements noch zusätzlich reduziert werden.

Bei den ersten, zweiten, dritten und/oder vierten Faltlinien handelt es sich um jeweils in das Material eingeformte Biegerillen mit einer Materialstärke von 55 bis 75% der Materialstärke des benachbarten Materials im Seitenbereich des becherförmigen Elements.

Die Materialstärke des becherförmigen Elements in dessen Faltbereich benachbart zu den Faltlinien d. h. in dessen ungeschwächten Seitenbereich zwischen Oberteil und Bodenteil liegt vorzugsweise im Bereich von 1,00 mm bis 1,6 mm. Zudem kann der Schieber mit einer Belüftungsöffnung versehen sein, die bei geöffnetem Schieber mit einer Belüftungsöffnung am Deckel fluchtet, so dass bei geöffneter randseitiger Öffnung (Trinköffnung) beim Trinken ein Druckausgleich erfolgen kann.

Der Bereich der randseitigen Öffnung und/oder der Bereich Belüftungsöffnung des Deckels können bzw. kann im jeweils geschlossenen Zustand durch jeweils einen z. B. am Schieber angespritzten Weichmaterialkomponenten-Bereich, der im Bereich der randseitigen Öffnung und/oder im Bereich der Belüftungsöffnung gegen den Deckel drückt oder umgekehrt, abgedichtet sein.

### Beschreibung der Erfindung anhand eines Ausführungsbeispiels

Eine zweckmäßige Ausgestaltung der vorliegenden Erfindung wird anhand eines Ausführungsbeispiels näher erläutert. Sich wiederholende Merkmale sind der Übersichtlichkeit halber nur einmal dargestellt. Es zeigen:
- Fig. 1: eine perspektivische Ansicht einer Ausgestaltung des erfindungsgemäßen Behälters im Gebrauchszustand;
- Fig. 2: eine perspektivische Ansicht des Behälters gemäß Fig. 1 im zusammengefalteten, gesicherten Zustand;
- Fig. 3: eine Schnittdarstellung der Schnittebene I-I von Fig. 1;
- Fig. 4: eine Explosionsdarstellung der Einzelteile des Behälters gemäß Fig. 1;
- Fig. 5: eine Seitenansicht des becherförmigen Elements des Behälters gemäß Fig. 1;
- Fig. 6: eine Schnittdarstellung des becherförmigen Elements von Fig. 5 in der Schnittebene II-II;
- Fig. 7: eine Seitenansicht des becherförmigen Elements des Behälters gemäß Fig. 1 nach Einleitung des Faltvorgangs; sowie
- Fig. 8: eine Draufsicht auf die obere Öffnung des becherförmigen Elements bei vollständiger Faltung.

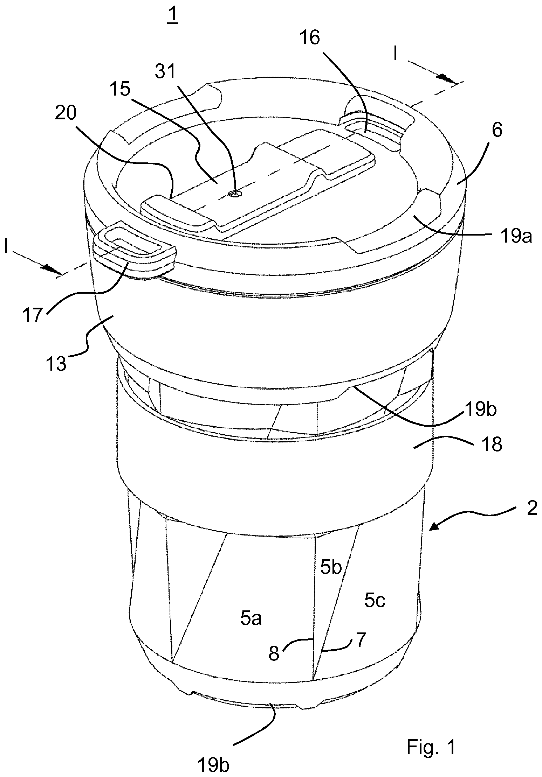

Bezugsziffer 1 in Fig. 1 zeigt eine zweckmäßige Ausgestaltung des erfindungsgemäßen faltbaren Behälters, z.B. Trinkbechers, im Gebrauchszustand. Der Behälter 1 umfasst einen Deckel 6 mit einer randseitigen Öffnung 16, die mittels eines am Deckel 6 befestigten, linear bewegbaren Schiebers 15 bei Bedarf verschließbar ist. Seitlich überstehend am Deckel 6 ist eine Befestigungsöse 7 vorgesehen.

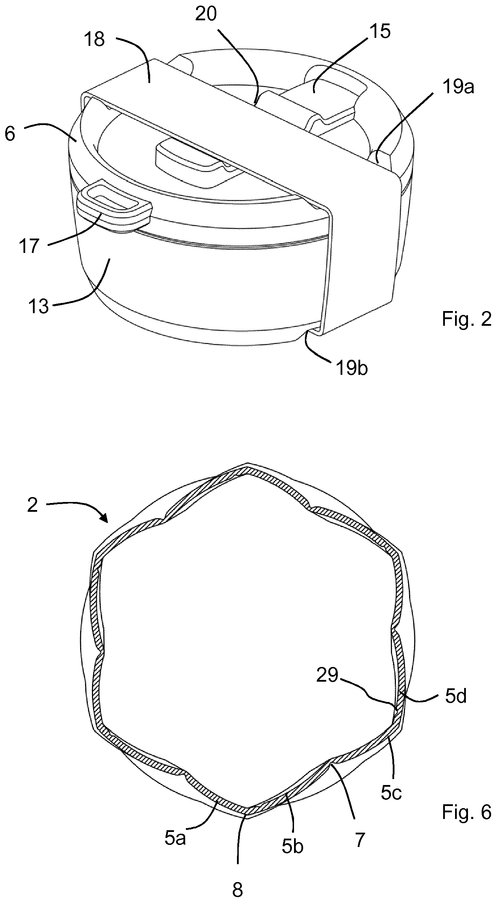

An der Unterseite des Deckels 6 schließt sich eine ringartige, z.B. kegelstumpfförmige, Manschette 13 an, die zusammen mit dem Deckel 6 den oberseitigen Bereich des Behälters 1 im Gebrauchszustand bildet. Aus der Manschette 13 ragt unterseitig ein becherförmiges Element 2 heraus, an dessen Außenseite sich ein umlaufender Haltering 18 befindet. Der Haltering 18 dient einerseits als Haltefläche, andererseits als thermische Isolierung gegenüber einer im Inneren des Behälters 1 befindlichen, heißen Flüssigkeit. Oberseitig am Deckel 6 und unterseitig an der Manschette 13 sind gegenüberliegende Ausnehmungen 19a bzw. 19b vorgesehen, deren Bedeutung nachstehend näher erläutert wird. Die Oberseite des Schiebers 15 ist ebenfalls mit einer Ausnehmung 20 versehen. Zudem ist der Schieber 15 mit einer Belüftungsöffnung 31 versehen, die bei geöffnetem Schieber 15 mit einer darunter befindlichen (aus Fig. 6 ersichtlichen) Belüftungsöffnung 32 am Deckel 6 fluchtet, so dass bei geöffnetem Schieber 15 bzw. geöffneter randseitiger Öffnung 16 beim Trinken ein Druckausgleich erfolgen kann.

Der Bereich der randseitigen Öffnung 16 und/oder der Bereich Belüftungsöffnung 32 des Deckels können bzw. kann im jeweils geschlossenen Zustand durch jeweils einen z. B. am Schieber 15 angespritzten (in den Figuren nicht dargestellte) Weichmaterialkomponenten-Bereich, der im Bereich der randseitigen Öffnung 16 und/oder im Bereich der Belüftungsöffnung 32 gegen den Deckel 6 drückt oder umgekehrt, abgedichtet sein.

Sofern der Behälter nicht gebraucht wird, sondern lediglich mitgeführt werden soll, befindet er sich in einem zusammengefalteten und gesicherten Zustand, wie er aus Fig. 2 ersichtlich ist. In diesem Zustand ist das becherförmige Element 2 zusammengefaltet innerhalb des Halterings 18 untergebracht. Zur Sicherung umschließt der Haltering 18 in vertikaler Orientierung die Anordnung aus Deckel 6, Manschette 13 sowie dem Bodenteil 3 des becherförmigen Elements 2. Hierzu ist der Haltering 18 aus elastischem Material ausgebildet. Beispielsweise kann es sich hierbei um ein Gummiband handeln. Die Ausnehmungen 19a, 19b sowie 20 sind so dimensioniert, dass der Haltering 18 durch die betreffenden Ausnehmungen 19a, 19b sowie 20 in seiner Lage fixiert wird.

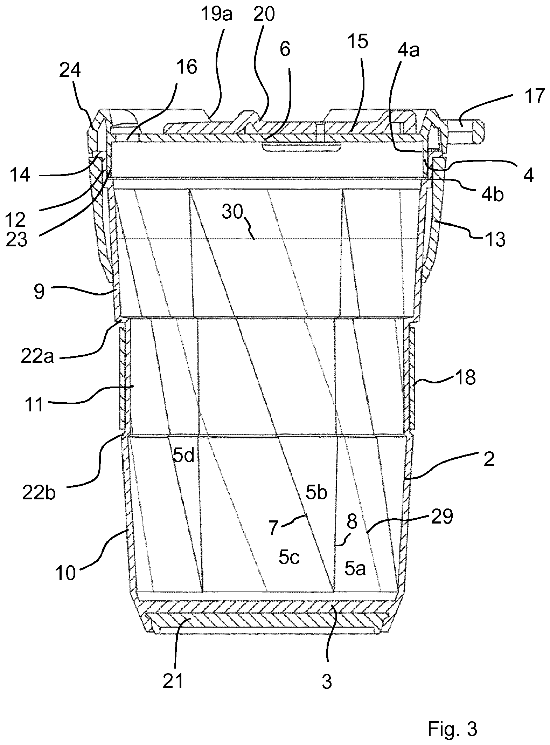

In Fig. 3 ist das faltbare becherförmige Element 2 im Schnitt der Schnittebene I-I von Fig. 1 erkennbar. Das becherförmige Element weist ein Bodenteil 3, ein Oberteil 4 mit Öffnung 4a sowie Seitenwandabschnitte 5a-5d auf, die von ersten sowie zweiten Faltlinien 7 bzw. 8 begrenzt sind. Die ersten Faltlinien 7 sind ausgehend von dem bodenseitigen Endbereich schräg nach oben orientiert, wohingegen die zweiten Faltlinien 8 ausgehend vom Bodenbereich im Wesentlichen geradlinig nach oben oder zumindest in einem geringeren Winkel zur Vertikalen als die ersten Faltlinien 7 orientiert sind. Die ersten und zweiten Faltlinien 7, 8 können hierbei von einem gemeinsamen Startpunkt im Bodenbereich des becherförmigen Elements 2 verlaufen. Die jeweilige schräg verlaufende erste Faltlinie 7 trifft sich mit einer benachbarten, geradlinig verlaufenden Faltlinie 8 im Oberteil 4 des becherförmigen Elements 2. Die sich entlang des Umfangs wiederholenden Seitenwandabschnitte 5a-5d sowie ersten und zweiten Faltlinien 7 bzw. 8 sind in den Figuren der Übersichtlichkeit halber nur einmal dargestellt.

Das becherförmige Element 2 umfasst ein oberes, kegelstumpfförmiges Segment 9 sowie ein unteres, ebenfalls kegelstumpfförmiges Segment 11. Zwischen den beiden Segmenten 9, 11 befindet sich ein zylindrisches Segment 10. Zwischen dem Segment 9 und dem Segment 10 kann eine umlaufende Stufe 22a vorgesehen sein. Zwischen dem Segment 10 und dem Segment 11 kann ebenfalls eine weitere umlaufende Stufe 22b vorgesehen sein. Der Haltering 18 liegt im Bereich des zylindrischen Segments 10 an.

Aus Fig. 3 sind ferner im entfalteten Zustand des becherförmigen Elements an der Innenseite des becherförmigen Elements, vgl. Fig. 6, in dieses als Materialverjüngung eingeformte, dritte Faltlinien 29 ersichtlich, die vom Bodenteil schräg in einem spitzen Winkel zur Senkrechten, vorzugsweise ebenfalls geradlinig, nach oben zur oberseitigen Öffnung hin verlaufend angeordnet sind. Sie verlaufen jeweils seitlich, vorzugsweise parallel, zu den ersten Faltlinien 7. Durch die Faltlinien 29 wird der Faltvorgang noch zusätzlich erleichtert, da sich das Material des becherförmigen Elements 2 beim Eindrehen um diese dritten Faltlinien 29 zusätzlich etwas nach innen falten.

Des Weiteren ist im entfalteten Zustand des becherförmigen Elements in dem oberen Bereich desselben an der Innenseite des becherförmigen Elements eine in diesen eingeformte, vierte Faltlinie 30 radial umlaufend angeordnet. Hierdurch kann am Ende des Eindrehens durch ein Umfalten um diese umlaufende vierte Faltlinie 30 die Höhe des gefalteten Bereichs des becherförmigen Elements 2 noch zusätzlich reduziert werden.

Das Bodenteil 3 des becherförmigen Elements 2 umfasst zudem eine kreisförmige Ausnehmung, in die ein Bodeneinsatz 21 zur Versteifung eingesetzt ist. Das Material des Bodeneinsatzes 21 kann eine größere Härte aufweisen als das Material des becherförmigen Elements 2.

Das becherförmige Element 2 besitzt im Bereich dessen oberseitiger Öffnung 4 einen umlaufenden, radial nach außen stehenden Kragen 14, der als Anschlag für die von unten aufzuschiebende Manschette 13 dient. Zur Fixierung wird der Deckel 6 von oben auf den oberen inneren Rand des becherförmigen Elements 2 aufgeschoben, sodass der obere Rand des becherförmigen Elements 2 zwischen der Innenwand der Manschette 13 sowie der Außenwand eines vertikal nach unten ragenden umlaufenden Stegs 23 des Deckels 6 klemmend fixiert ist. Zudem wird der radial nach außen stehende Kragen 14 zwischen einem nach unten sich erstreckenden Außensteg 24 des Deckels 6 sowie der oberen Stirnseite der Manschette 13 klemmend gehalten. Im Oberteil 4 des becherförmigen Elements 2 ist eine Stufe 4b eingeformt, die als Anschlag für den Steg 23 dient. Der Deckel ist auf diese Weise dichtend aber abnehmbar am becherförmigen Element 2 fixiert.

Der Deckel 6 weist eine, vorzugsweise letzteren radial nach außen überragende, Befestigungsöse 17 auf, die dazu dient, den Becher z.B. mittels eines Karabinerhakens an einem (nicht dargestellten) Rucksack oder am Körper an einem (ebenfalls nicht dargestellten) Befestigungsband zu fixieren.

Als Material des becherförmigen Elements 2 ist ein weiches, flexibles verformbares Kunststoff- oder Gummimaterial vorgesehen, vorzugsweise ein Silikonkautschuk, einen Silikongummi oder ein Silikonelastomer. Im Gegensatz dazu ist das Material des Deckels 6 und/oder der Manschette 13 aus steiferem Material, vorzugsweise aus PP oder PE.

Bei den ersten, zweiten, dritten und/oder vierten Faltlinien handelt es sich um jeweils in das Material eingeformte Biegerillen mit einer Materialstärke von 55 bis 75% der Materialstärke des benachbarten Materials im Seitenbereich des becherförmigen Elements. Die Materialstärke des becherförmigen Elements in dessen Faltbereich benachbart zu den Faltlinien d. h. in dessen ungeschwächten Seitenbereich zwischen Oberteil und Bodenteil liegt im Bereich von 1,00 mm bis 1,6 mm.

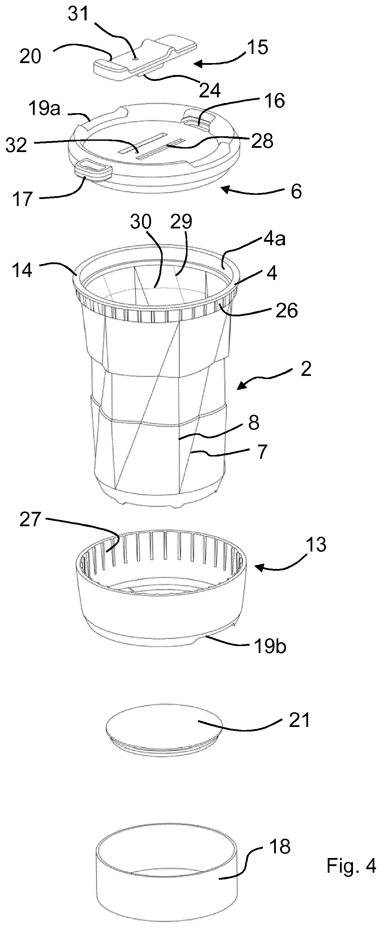

In Fig. 4 ist der erfindungsgemäße Behälter als Explosionsdarstellung gezeigt. Er umfasst insgesamt sechs Einzelteile, nämlich das becherförmige Element 2, die Manschette 13, das Bodenteil 3, welches an der Unterseite des becherförmigen Elements 2 in eine dort vorgesehene Ausnehmung eingeschnappt wird, den Deckel 6 sowie den am Deckel 6 angebrachten Schieber 15. Der Schieber 15 weist zwei längliche, parallel angeordnete Raststege 24 auf, die in zwei entsprechende, am Deckel 6 vorgesehene Längsschlitze 28 rastend eingreifen, jedoch eine lineare Längsverschiebung des Schiebers 15 zum Deckel 6 ermöglichen. Alternativ kann eine Fixierung des Schiebers 15 am Deckel 6 auch dadurch erfolgen, dass an der Oberseite des Deckels 6 (in den Figuren jeweils nicht dargestellte) Vorsprünge angeformt sind, die in eine (in den Figuren ebenfalls jeweils nicht dargestellte) unterseitige Ausnehmung am Schieber 15 rastend eingreifen und hierdurch eine lineare Verschiebung des Schiebers 6 zum Deckel 6 ermöglicht wird.

Der Bodeneinsatz 21 kann vorzugsweise aus einem steiferen Material bestehen. Hierdurch wird eine notwendige Steifigkeit und damit Standfestigkeit des Behältnisses erreicht.

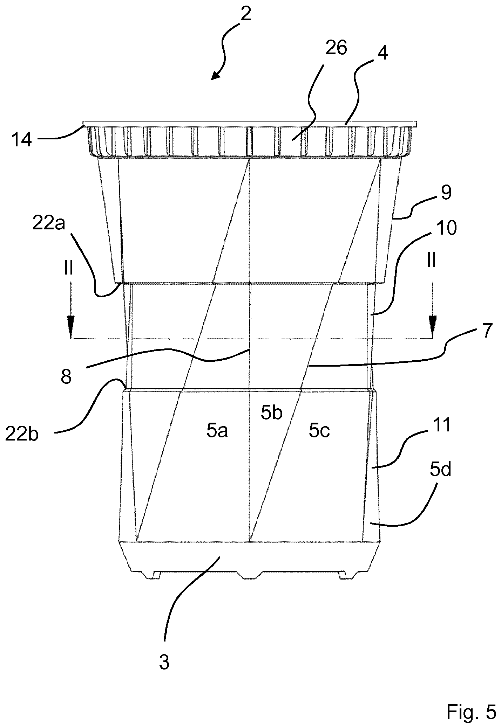

Fig. 5 zeigt das becherförmige Element 2 des erfindungsgemäßen Behältnisses 1 in Seitenansicht. Man erkennt eine Mehrzahl von unterschiedlich orientierten Faltlinien 7, 8. Die Faltlinien 7 verlaufen von der Unterseite des Elements 3 in einem spitzen Winkel zur Vertikalen schräg nach oben, wohingegen die Faltlinien 8 im Wesentlichen vertikal nach oben verlaufen. Im Bereich des Bodenteils 3 gehen die Faltlinien 7 sowie 8 von einem gemeinsamen Punkt aus, wobei im Oberteil 4 die schräg verlaufende erste Faltlinie 7 mit der benachbarten vertikal verlaufenden zweiten Faltlinie 8 zusammentrifft. Die schräg verlaufenden ersten Faltlinien 7 sind, vgl. Fig. 6, derart in das becherförmige Element 2 eingeformt, dass die der Faltlinie 7 benachbarten Seitenwandabschnitte 5b, 5c ausgehend von einer Kreisumfangfläche nach innen verlaufen und aus diesem Grund bereits eine gewisse Neigung zueinander besitzen. Die benachbarten Seitenwandabschnitte 5b, 5c bewegen sich beim Eindrehen des Bodenteils 3 des becherförmigen Elements 2 um die als Gelenk wirkende Faltlinie 7 stärker aufeinander zu.

Die Faltlinien 7 sind vorzugsweise als linienartige Materialverdünnungen in das Material des becherförmigen Elements 2 eingeformt. Die Materialverdünnung ist hierbei vorzugsweise außenseitig, was die Reinigung der Innenseite des becherförmigen Elements 2 erleichtert.

Die der zweiten Faltlinie 8 benachbarten Seitenwandabschnitte 5a, 5b sind demgegenüber ebenfalls bereits zur Faltlinie 8 als Scharnier in geringfügigem Winkel jedoch in entgegengesetzter Orientierung gefaltet, was bei einem Verdrehen des Bodenteils 3 des becherförmigen Elements 2 dazu führt, dass diese beiden Seitenwandabschnitte ebenfalls aufeinander zu falten, allerdings in entgegengesetzter Faltrichtung zu den beiden benachbarten Seitenwandabschnitten 5b, 5c.

Die vorbeschriebene, besondere Art der Faltung ermöglicht es, das becherförmige Element 2 an dessen unterem Ende mit den Händen gefasst z. B. entgegen dem Uhrzeigersinn zu drehen und hierdurch in einfacher Weise und ohne erhöhte Kraftaufwendung zu falten bzw. zu entfalten. Die Faltlinien 7, 8 gewährleisten darüber hinaus eine gewisse Versteifung des becherförmigen Elements 2 im entfalteten Zustand und ermöglichen darüber hinaus eine einfache Reinigung des Innenbereichs des becherförmigen Elements 2.

Das becherförmige Element 2 umfasst beispielsweise bei der in Fig. 5 dargestellten Ausgestaltung drei Bereiche, nämlich ein oberes kegelstumpfförmiges Segment 9, ein unteres kegelstumpfförmiges Segment 10 sowie ein dazwischen befindliches zylindrisches Segment 11. Das zylindrische Segment 11 dient dazu, den Haltering 18, welcher vorzugsweise elastisch ausgebildet sein kann, aufzunehmen, sodass dieser im Gebrauchszustand zudem als thermisch isolierende, auf das Element 2 aufgezogene Haltemanschette verwendet werden kann, wie dies in Fig. 1 dargestellt ist.

Am Oberteil 4 des becherförmigen Elements 2 unterhalb des Kragens 14 sind umlaufend vertikal verlaufende Rippen 26 vorgesehen, die in entsprechende Vertiefungen 27, siehe Fig. 4, an der Innenseite der Manschette 13 eingreifen und die Verbindung zwischen Manschette 13 und becherförmigem Element 2 noch zusätzlich verbessern.

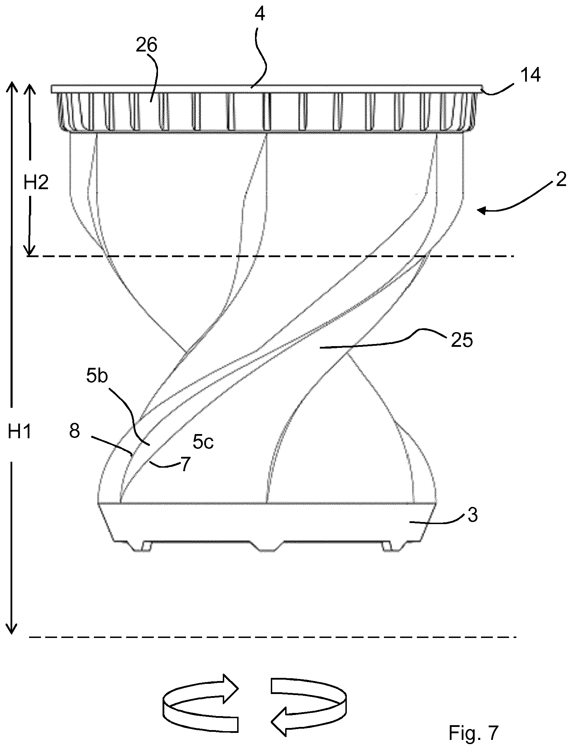

Die Fig. 7 zeigt aus Gründen der Übersichtlichkeit lediglich das becherförmige Element 2 nach bereits erfolgter Einleitung des Faltvorgangs durch Drehung des Bodenteils 3 desselben relativ zum Oberteil 4 entgegengesetzt zum Uhrzeigersinn.

H1 bezeichnet hierbei die Höhe des becherförmigen Elements 2 im vollständig ausgefahrenen, d.h. vollständig entfalteten, Zustand, wohingegen H2 die Höhe im vollständig gefalteten Zustand zeigt. Der in Fig. 7 dargestellte Zustand stellt somit einen Zwischenzustand dar, um die Art der durch Verdrehung des Bodenteils 3 zum Oberteil 4 erzeugten Einschnürung 28 zu demonstrieren. Je weiter das Bodenteil 3 entgegengesetzt zum Uhrzeigersinn gedreht wird, desto stärker schnürt sich das becherförmige Element 2 ein und desto näher rücken das Bodenteil 3 und das Oberteil 4 zueinander.

Der Verlauf und die Anordnung der Faltlinien 7, 8 unterstützt diese Einschnürung 28.

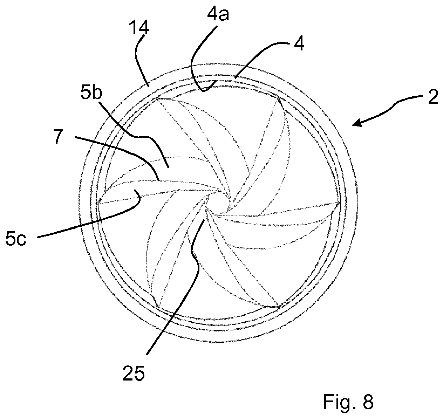

Fig. 8 zeigt das becherförmige Element 2 im vollständig gefalteten Zustand mit Blickrichtung von oben auf die oberseitige Öffnung 4a. Man erkennt, dass sich das becherförmige Element im Bereich der Einschnürung 28 durch die Torsion ganz erheblich eingeschnürt hat.

Zum Entfalten des becherförmigen Elements 2 muss, nach dem Entfernen des Halterings 18, vgl. Fig. 2, dieses am Bodenteil 3 mit den Fingern gefasst und bei der in Fig. 7 sowie 8 gezeigten Ausgestaltung im Uhrzeigersinn gedreht werden, wodurch sich das becherförmige Element 2 sehr leichtgängig entfaltet und sich die Einschnürung 25 sich mit zunehmendem Drehwinkel reduziert bzw. auflöst, sodass das becherförmige Element 2 wieder die Ausgangshöhe H1 innehat.

Das becherförmige Element ist als ein einteiliges Formteil konzipiert. Es umfasst insbesondere keine weiteren eingeformten Stützteile aus einem anderen Material.

Die vorher beschriebenen Zeichnungsfiguren betreffen lediglich Beispiele der vorliegenden Erfindung. Auch Unterkombinationen von Merkmalen der in den Zeichnungsfiguren gezeigten Ausgestaltungen sind ausdrücklich vom Offenbarungsgehalt umfasst.

### BEZUGSZEICHENLISTE

- 1: Behälter
- 2: becherförmiges Element
- 3: Bodenteil
- 4: Oberteil
- 4a: Öffnung
- 4b: Stufe
- 5a: Seitenwandabschnitt
- 5b: Seitenwandabschnitt
- 5c: Seitenwandabschnitt
- 5d: Seitenwandabschnitt
- 6: Deckel
- 7: erste Faltlinie
- 8: zweite Faltlinie
- 9: kegelstumpfförmiges Segment
- 10: kegelstumpfförmiges Segment
- 11: zylindrisches Segment
- 12: oberseitiger Rand
- 13: Manschette
- 14: Kragen
- 15: linearer Schieber
- 16: randseitige Öffnung
- 17: Befestigungsöse
- 18: Haltering
- 19a: Ausnehmung
- 19b: Ausnehmung
- 20: Ausnehmung
- 21: Bodeneinsatz
- 22a: umlaufende Stufe
- 22b: umlaufende Stufe
- 23: umlaufender Steg
- 24: Raststege
- 25: Einschnürung
- 26: Rippe
- 27: Vertiefung
- 28: Längsschlitz
- 29: dritte Faltlinie
- 30: vierte Faltlinie
- 31: Belüftungsöffnung (Schieber)
- 32: Belüftungsöffnung (Deckel)

- H1: Ausganghöhe (entfaltet) des becherförmigen Elements
- H2: Höhe des becherförmigen Elements im gefalteten Zustand

## Patentansprüche

1. Zusammenfaltbarer Behälter in Form eines zusammen- und wieder entfaltbaren Trinkbechers, umfassend ein becherförmiges Element (2) aus flexiblem verformbaren Material mit einem unterseitigen Bodenteil (3), einem Oberteil (4) mit Öffnung (4a) sowie dazwischen angeordneten Seitenwandabschnitten (5a, 5b, 5c, 5d), wobei
die Seitenwandabschnitte (5a, 5b, 5c, 5d) entlang von in das Material des becherförmigen Elements (2) eingeformten Faltlinien (7, 8) zueinander faltbar sind,
wobei das becherförmige Element (2) durch Verdrehen des Bodenteils (3) zum Oberteil (4) zusammenfaltbar ist,
wobei die Faltlinien (7, 8) derart orientiert sind, dass sich das becherförmige Element (2) zwischen dem Bodenteil (3) und dem Oberteil (4) während des Verdrehens des Bodenteils (3) durch Verwindung einschnürt,
wobei im entfalteten Zustand des becherförmigen Elements (2) erste Faltlinien (7) vom Bodenteil (3) schräg nach oben zur oberseitigen Öffnung (4a) hin verlaufend angeordnet sind,
wobei im entfalteten Zustand des becherförmigen Elements (2) zweite Faltlinien (8) vom Bodenteil (3) in einem geringeren Winkel zur Senkrechten als die ersten Faltlinien (7) oder im Wesentlichen senkrecht nach oben zur oberseitigen Öffnung (4a) hin verlaufend angeordnet sind,
wobei die den ersten und zweiten Faltlinien (7, 8) jeweils benachbarten Seitenwandabschnitte (5b, 5c bzw. 5a, 5b) gegenläufig zueinander verschwenkbar sind, **dadurch gekennzeichnet, dass**
im vollständig entfalteten Zustand die den ersten Faltlinien (7) jeweils benachbarten Seitenwandabschnitte (5b, 5c) zu der ersten Faltlinie (7) hin nach innen orientiert sind und die den zweiten Faltlinien (8) jeweils benachbarten Seitenwandabschnitte (5a, 5b) zu der zweiten Faltlinie (8) hin nach außen orientiert sind.

2. Behälter nach Anspruch 1, **dadurch gekennzeichnet, dass**
im entfalteten Zustand des becherförmigen Elements (2) die ersten Faltlinien (7) vom Bodenteil (3) geradlinig nach oben zur oberseitigen Öffnung (4a) hin verlaufend angeordnet sind.

3. Behälter nach Anspruch 2, **dadurch gekennzeichnet, dass**
im entfalteten Zustand des becherförmigen Elements (2) die zweiten Faltlinien (8) vom Bodenteil (3) in einem geringeren Winkel zur Senkrechten als die erste Faltlinien (7) oder im Wesentlichen geradlinig nach oben zur oberseitigen Öffnung (4a) hin verlaufend angeordnet sind.

4. Behälter nach den Ansprüchen 1 oder 3, **dadurch gekennzeichnet, dass** die ersten und zweiten Faltlinien (7, 8) im Bereich des Bodenteils (3) einen gemeinsamen Ausgangspunkt besitzen.

5. Behälter nach den Ansprüchen 1 bis 4, **dadurch gekennzeichnet, dass** erste und zweite Faltlinien (7, 8) im Bereich der oberseitigen Öffnung (4a) und/oder im Bereich des Bodenteils (3) auf einander zulaufen oder in einem gemeinsamen Punkt enden.

6. Behälter nach den vorhergehenden Ansprüchen, **dadurch gekennzeichnet, dass** die Wandstärke des becherförmigen Elements (2), vorzugsweise an deren Außenseite, im Bereich der ersten und/oder zweiten Faltlinien (7, 8) zur Wandstärke der Seitenwandabschnitte (5b, 5c bzw. 5a, 5b) reduziert ist.

7. Behälter nach den vorhergehenden Ansprüchen, **dadurch gekennzeichnet, dass** als Material des becherförmigen Elements (2) ein Silikonkautschuk, ein Silikonelastomer oder Silikongummi vorgesehen ist.

8. Behälter nach den vorhergehenden Ansprüchen, **dadurch gekennzeichnet, dass** der obere Bereich des becherförmigen Elements (2) von einer mit einem Deckel (6) verschlossenen Manschette (13) umgeben ist.

9. Behälter nach den vorhergehenden Ansprüchen, **dadurch gekennzeichnet, dass** ein oberseitiger Rand (12) und/oder ein radial nach außen stehender Kragen (14) des becherförmigen Elements (2) zwischen Deckel (6) und Manschette 13, vorzugsweise ohne Rastung, klemmend fixiert ist.

10. Behälter nach Anspruch 8 oder 9, **dadurch gekennzeichnet, dass** die Manschette (13) von der Unterseite des becherförmigen Elements (2) auf letzteres aufschiebbar ist.

11. Behälter nach den Ansprüchen 8 bis 10, **dadurch gekennzeichnet, dass** die Manschette (13) kegelstumpfförmig ausgebildet ist.

12. Behälter nach den Ansprüchen 9 bis 11, **dadurch gekennzeichnet, dass** der Kragen (14) zwischen dem oberen Rand der Manschette (13) und dem unteren Rand eines sich nach unten erstreckenden umlaufenden Außenstegs (24) des Deckels (6) geklemmt ist.

13. Behälter nach den Ansprüchen 8 bis 12, **dadurch gekennzeichnet, dass** der Deckel (6) eine mittels eines linearen Schiebers (15) verschließbare, vorzugsweise randseitige Öffnung (16) aufweist.

14. Behälter nach den Ansprüchen 8 bis 13, **dadurch gekennzeichnet, dass** am Deckel (6) oder an der Manschette eine vorzugsweise den Deckel (6) oder die Manschette (17) radial nach außen überragende Befestigungsöse (17) vorgesehen ist.

15. Behälter nach den vorhergehenden Ansprüchen, **dadurch gekennzeichnet, dass** der Behälter (1) im zusammengefalteten Zustand mittels eines den Behälter (1) vertikal umgreifenden, vorzugsweise elastischen, Halterings (18) zusammengehalten wird.

16. Behälter nach den vorhergehenden Ansprüchen, **dadurch gekennzeichnet, dass** im entfalteten Zustand des becherförmigen Elements (2), vorzugsweise an der Innenseite des becherförmigen Elements (2) in diesen eingeformte, dritte Faltlinien (29) vom Bodenteil (3) schräg, vorzugsweise geradlinig, nach oben zur oberseitigen Öffnung (4a) hin verlaufend angeordnet sind.

17. Behälter nach den vorhergehenden Ansprüchen, **dadurch gekennzeichnet, dass** im entfalteten Zustand des becherförmigen Elements (2) in dem oberen Bereich desselben, vorzugsweise an der Innenseite des becherförmigen Elements (2) eine in diesen eingeformte, vierte Faltlinie (30) radial umlaufend verlaufend angeordnet ist.

## Claims

1. Collapsible container in the form of a collapsible and re-expandable drinking cup, comprising
a cup-like element (2) composed of flexible deformable material with a bottom-side base part (3), with a top part (4) with an opening (4a), and with side-wall portions (5a, 5b, 5c, 5d) arranged therebetween, wherein
the side-wall portions (5a, 5b, 5c, 5d) are foldable in relation to one another along fold lines (7, 8) formed in the material of the cup-like element (2),
wherein the cup-like element (2) is collapsible by way of rotation of the base part (3) in relation to the top part (4),
wherein the fold lines (7, 8) are oriented in such a manner that the cup-like element (2) constricts between the base part (3) and the top part (4) during the rotation of the base part (3) as a result of twisting,
wherein, in the expanded state of the cup-like element (2), first fold lines (7) are arranged so as to extend from the base part (3) upwards towards the top-side opening (4a) in an oblique manner,
wherein, in the expanded state of the cup-like element (2), second fold lines (8) are arranged so as to extend from the base part (3) upwards towards the top-side opening (4a) at a smaller angle to the vertical than the first fold lines (7) or in a substantially vertical manner,
wherein the side-wall portions (5b, 5c and 5a, 5b, respectively) in each case adjacent to the first and second fold lines (7, 8) are pivotable oppositely in relation to one another, **characterized in that,**
in the completely expanded state, the side-wall portions (5b, 5c) in each case adjacent to the first fold lines (7) are oriented inwards towards the first fold line (7), and the side-wall portions (5a, 5b) in each case adjacent to the second fold lines (8) are oriented outwards towards the second fold line (8).

2. Container according to Claim 1, **characterized in that,**
in the expanded state of the cup-like element (2), the first fold lines (7) are arranged so as to extend from the base part (3) upwards towards the top-side opening (4a) in a rectilinear manner.

3. Container according to Claim 2, **characterized in that,**
in the expanded state of the cup-like element (2), the second fold lines (8) are arranged so as to extend from the base part (3) upwards towards the top-side opening (4a) at a smaller angle to the vertical than the first fold lines (7) or in a substantially rectilinear manner.

4. Container according to Claim 1 or 3, **characterized in that**
the first and second fold lines (7, 8) have a common starting point in the region of the base part (3) .

5. Container according to Claims 1 to 4, **characterized in that**
first and second fold lines (7, 8) run towards one another or end at a common point in the region of the top-side opening (4a) and/or in the region of the base part (3).

6. Container according to the preceding claims, **characterized in that**
the wall thickness of the cup-like element (2), preferably at the outer side thereof, is reduced in the region of the first and/or second fold lines (7, 8) in relation to the wall thickness of the side-wall portions (5b, 5c and/or 5a, 5b, respectively).

7. Container according to the preceding claims, **characterized in that**
a silicone elastomer or silicone rubber is provided as material of the cup-like element (2).

8. Container according to the preceding claims, **characterized in that**
the upper region of the cup-like element (2) is surrounded by a sleeve (13) which is closed off by a cover (6).

9. Container according to the preceding claims, **characterized in that**
an upper-side edge (12) and/or a radially outwardly projecting collar (14) of the cup-like element (2) is fixed in a clamping manner, preferably without latching, between cover (6) and sleeve (13).

10. Container according to Claim 8 or 9, **characterized in that**
the sleeve (13) is able to be pushed from the bottom side of the cup-like element (2) onto the latter.

11. Container according to Claims 8 to 10, **characterized in that**
the sleeve (13) is of frustoconical form.

12. Container according to Claims 9 to 11, **characterized in that**
the collar (14) is clamped between the upper edge of the sleeve (13) and the lower edge of a downwardly extending encircling outer web (24) of the cover (6) .

13. Container according to Claims 8 to 12, **characterized in that**
the cover (6) has a preferably edge-side opening (16) which is able to be closed off by means of a linear slide (15).

14. Container according to Claims 8 to 13, **characterized in that**
a fastening eyelet (17) is provided on the cover (6) or on the sleeve, said fastening eyelet preferably projecting radially outwardly beyond the cover (6) or the sleeve (17).

15. Container according to the preceding claims, **characterized in that,**
in the collapsed state, the container (1) is held together by means of a preferably elastic holding ring (18) which engages vertically around the container (1).

16. Container according to the preceding claims, **characterized in that,**
in the expanded state of the cup-like element (2), preferably on the inner side of the cup-like element (2), third fold lines (29) formed therein are arranged so as to extend from the base part (3) upwards towards the top-side opening (4a) in an oblique, preferably rectilinear, manner.

17. Container according to the preceding claims, **characterized in that,**
in the expanded state of the cup-like element (2), in the upper region thereof, preferably on the inner side of the cup-like element (2), a fourth fold line (30) formed therein is arranged so as to extend in a radially encircling manner.

## Revendications

1. Récipient repliable sous la forme d'un gobelet repliable et dépliable, comprenant
un élément en forme de gobelet (2) en matériau flexible déformable avec une partie de fond du côté inférieur (3), une partie supérieure (4) avec une ouverture (4a) ainsi que des sections de paroi latérale (5a, 5b, 5c, 5d) agencées entre elles,
les sections de paroi latérale (5a, 5b, 5c, 5d) pouvant être pliées les unes vers les autres le long de lignes de pliage (7, 8) formées dans le matériau de l'élément en forme de gobelet (2),
l'élément en forme de gobelet (2) pouvant être replié par rotation de la partie de fond (3) vers la partie supérieure (4),
les lignes de pliage (7, 8) étant orientées de telle sorte que l'élément en forme de gobelet (2) se serre entre la partie de fond (3) et la partie supérieure (4) pendant la rotation de la partie de fond (3) par torsion,
à l'état déplié de l'élément en forme de gobelet (2), des premières lignes de pliage (7) étant agencées en s'étendant en oblique vers le haut depuis la partie de fond (3) vers l'ouverture du côté supérieur (4a),
à l'état déplié de l'élément en forme de gobelet (2), des deuxièmes lignes de pliage (8) étant agencées en s'étendant depuis la partie de fond (3) à un angle plus faible par rapport à la verticale que les premières lignes de pliage (7) ou essentiellement perpendiculairement vers le haut vers l'ouverture du côté supérieur (4a),
les sections de paroi latérale (5b, 5c ou 5a, 5b) respectivement voisines des premières et deuxièmes lignes de pliage (7, 8) pouvant pivoter en sens inverse l'une par rapport à l'autre, **caractérisé en ce que**
à l'état complètement déplié, les sections de paroi latérale (5b, 5c) respectivement voisines des premières lignes de pliage (7) sont orientées vers l'intérieur vers la première ligne de pliage (7) et les sections de paroi latérale (5a, 5b) respectivement voisines des deuxièmes lignes de pliage (8) sont orientées vers l'extérieur vers la deuxième ligne de pliage (8).

2. Récipient selon la revendication 1, **caractérisé en ce qu'**à l'état déplié de l'élément en forme de gobelet (2), les premières lignes de pliage (7) sont agencées en s'étendant en ligne droite vers le haut depuis la partie de fond (3) vers l'ouverture du côté supérieur (4a).

3. Récipient selon la revendication 2, **caractérisé en ce qu'**à l'état déplié de l'élément en forme de gobelet (2), les deuxièmes lignes de pliage (8) sont agencées en s'étendant depuis la partie de fond (3) à un angle plus faible par rapport à la verticale que les premières lignes de pliage (7) ou essentiellement en ligne droite vers le haut vers l'ouverture du côté supérieur (4a).

4. Récipient selon la revendication 1 ou 3, **caractérisé en ce que** les premières et deuxièmes lignes de pliage (7, 8) possèdent un point de départ commun dans la zone de la partie de fond (3).

5. Récipient selon les revendications 1 à 4, **caractérisé en ce que** les premières et deuxièmes lignes de pliage (7, 8) convergent les unes vers les autres dans la zone de l'ouverture du côté supérieur (4a) et/ou dans la zone de la partie de fond (3) ou se terminent en un point commun.

6. Récipient selon les revendications précédentes, **caractérisé en ce que** l'épaisseur de paroi de l'élément en forme de gobelet (2), de préférence sur son côté extérieur, est réduite dans la zone des premières et/ou deuxièmes lignes de pliage (7, 8) par rapport à l'épaisseur de paroi des sections de paroi latérale (5b, 5c ou 5a, 5b).

7. Récipient selon les revendications précédentes, **caractérisé en ce qu'**un caoutchouc de silicone, un élastomère de silicone ou une gomme de silicone est prévu en tant que matériau de l'élément en forme de godet (2).

8. Récipient selon les revendications précédentes, **caractérisé en ce que** la zone supérieure de l'élément en forme de gobelet (2) est entourée d'un manchon (13) fermé par un couvercle (6).

9. Récipient selon les revendications précédentes, **caractérisé en ce qu'**un bord du côté supérieur (12) et/ou une collerette (14) de l'élément en forme de gobelet (2), faisant saillie radialement vers l'extérieur, est fixé par serrage, de préférence sans encliquetage, entre le couvercle (6) et le manchon (13).

10. Récipient selon la revendication 8 ou 9, **caractérisé en ce que** le manchon (13) peut être enfilé sur l'élément en forme de gobelet (2) depuis le côté inférieur de ce dernier.

11. Récipient selon les revendications 8 à 10, **caractérisé en ce que** le manchon (13) est réalisé sous forme tronconique.

12. Récipient selon les revendications 9 à 11, **caractérisé en ce que** la collerette (14) est serrée entre le bord supérieur du manchon (13) et le bord inférieur d'une entretoise extérieure périphérique (24) du couvercle (6) s'étendant vers le bas.

13. Récipient selon les revendications 8 à 12, **caractérisé en ce que** le couvercle (6) présente une ouverture (16), de préférence du côté du bord, pouvant être fermée au moyen d'un coulisseau linéaire (15).

14. Récipient selon les revendications 8 à 13, **caractérisé en ce qu'**il est prévu sur le couvercle (6) ou sur le manchon un œillet de fixation (17) dépassant de préférence radialement vers l'extérieur du couvercle (6) ou du manchon (17).

15. Récipient selon les revendications précédentes, **caractérisé en ce que** le récipient (1) est maintenu à l'état replié au moyen d'un anneau de maintien (18), de préférence élastique, qui entoure verticalement le récipient (1).

16. Récipient selon les revendications précédentes, **caractérisé en ce qu'**à l'état déplié de l'élément en forme de gobelet (2), de préférence sur le côté intérieur de l'élément en forme de gobelet (2), des troisièmes lignes de pliage (29) formées dans celui-ci sont agencées en s'étendant en oblique, de préférence en ligne droite, depuis la partie de fond (3) vers le haut vers l'ouverture du côté supérieur (4a).

17. Récipient selon les revendications précédentes, **caractérisé en ce qu'**à l'état déplié de l'élément en forme de gobelet (2), une quatrième ligne de pliage (30) formée dans celui-ci est agencée dans la zone supérieure de celui-ci, de préférence sur le côté intérieur de l'élément en forme de gobelet (2), en s'étendant radialement sur la périphérie.
